# EUROPÄISCHE PATENTSCHRIFT

(11) **EP 0 364 701 B1**
(45) Veröffentlichungstag und Bekanntmachung des Hinweises auf die Patenterteilung: **06.07.1994**
(21) Anmeldenummer: 89115788.5
(22) Anmeldetag: 26.08.1989
(51) Int. Cl.: B29C 47/10, B29C 47/60

(54) **Extruder**
Extruder
Extrudeuse

(30) Priorität: 15.10.1988 DE 3835250
(43) Veröffentlichungstag der Anmeldung: 25.04.1990
(73) Patentinhaber: HEINRICH KOCH PLASTMASCHINEN GmbH, 53721 Siegburg (DE)
(72) Erfinder: Koch, Heinrich, D-5200 Siegburg (DE)
(74) Vertreter: Harwardt, Günther, Dipl.-Ing.

(56) Entgegenhaltungen:
- EP-A- 0 100 945
- DE-A- 2 142 689
- DE-A- 2 351 328
- DE-A- 2 823 171
- DE-C- 840 596
- DE-C- 899 386
- DE-C- 3 221 492
- DE-C- 3 808 723
- DE-U- 8 612 130
- FR-A- 2 399 311
- US-A- 3 743 252

## Beschreibung

Die Erfindung betrifft einen Schweißextruder zum Plastifizieren eines Kunststoffdrahtes, insbesondere eines Runddrahtes, aus thermoplastischem Kunststoff, mit einem Gehäuse und einer im Gehäuse drehbar angeordnete Schnecke, wobei die Schnecke einen kürzeren Abschnitt mit einem im Querschnitt sägezahnförmigen Profil zum Einziehen des Kunststoffdrahtes aufweist, und einen dazu im Durchmesser verringerten, längeren und über zumindest einen Teil seiner Länge beheizbaren Plastifizierabschnitt zum Plastifizieren des Kunststoffdrahtes aufweist, mit einem Einzugskanal im Gehäuse, der zur Außenkontur des Profils des kürzeren Abschnitts der Schnecke offen ist und über welchen der Kunststoffdraht in Kontakt mit diesem Abschnitt ist, und mit einem Antrieb für die Schnecke.

Ein solcher Schweißextruder ist in der DE-U-8 612 130 beschrieben. Im Gehäuse des Schweißextruders ist ein Schlitz vorhanden, welcher als Einzugskanal dient. Der einzuziehende und aufzuschmelzende Kunststoffdraht wird parallel zur Außenkontur des im Durchmesser vergrößerten Einziehschneckenabschnittes geführt. Das sägezahnförmige Profil des Einziehschneckenabschnittes greift dabei nur in die Oberfläche des Kunststoffdrahtes ein, da er über einen Hebel an die Außenkontur angedrückt wird. Der Hebel dient zum Dickenausgleich. Anschließend wird der Draht in eine schräg verlaufende Bohrung umgelenkt, die in dem Gehäuseabschnitt mündet, in dem der Plastifizierschneckenabschnitt aufgenommen ist. Aufgrund dieser Anordnung findet ein Abscheren und Granulieren im Plastifizierschneckenabschnitt beim Übertritt des Kunststoffdrahtes in die Gänge der Schnecke statt.

In der DE-C-3221492 ist ein Extruder für die Plastifizierung von Kunststoffmaterial, welches in eine Schweißfuge abgelegt wird, beschrieben, wobei zur Anpassung an verschiedene Materialstärken des zugeführten Kunststoffmateriales ein Dickenausgleichschieber vorgesehen ist. Der dem Einzugskanal zugeordnete Schneckenabschnitt ist nur als Einzugsabschnitt ausgebildet, d. h. das Material wird erst in dem anschließenden Schneckenabschnitt, welcher als Förder- und Zerkleinerungsorgan ausgebildet ist und den längeren Schneckenabschnitt bildet, zerkleinert und anschließend plastifiziert. Der Einzugsabschnitt ist lediglich als Förderschraube ausgebildet.

Bei Extrudern ist es allgemein bekannt, die Schnecke mehrteilig aufzubauen, d. h. mehrere Abschnitte aufweisen zu lassen, von denen einer beispielsweise als Plastifizierschneckenabschnitt und der andere als Einzugsabschnitt ausgebildet ist. In den Bereich des Einzugsabschnittes mündet ein Einzugskanal, durch den das zu verarbeitende Kunststoffmaterial, welches strangförmig, beispielsweise in Form von Bändchen, ausgebildet sein kann, eingeführt und eingezogen wird. Dabei ist es bekannt, diesen Einzugsschneckenabschnitt beispielsweise zylindrisch oder aber konisch zu gestalten. Die aus den beiden Abschnitten bestehende Schnecke wird von einem Antrieb, der bevorzugt gleichachsig angeordnet ist, angetrieben. Die Schnecke selbst stützt sich in der Regel antriebsseitig an einem Axiallager ab.

Es hat sich gezeigt, daß bei kleineren Extrudern mit einer solchen Gestaltung die Aufschmelzung des Materials nicht optimal erfolgt. Insbesondere wird kein homogener, aus der Düse austretender plastifizierter Strang erzeugt. Inhomogenitäten bewirken eine Qualitätsminderung des aufgeschmolzenen bzw. plastifizierten Materiales und darüberhinaus, wird dadurch bei der Verbindung von thermoplastischen Kunststoffelementen, durch Schweißen eine verminderte Schweißnahtqualität erreicht.

Hiervon ausgehend liegt der Erfindung die Aufgabe zugrunde, einen schnelllaufenden Schweißextruder zu schaffen, mit dem auch bei kurzer Gesamtlänge der Schnecke eine verbesserte Plastifizierung gewährleistet ist und ein weitestgehend homogen, plastifizierter Strang erzeugt wird.

Diese Aufgabe wird erfindungsgemäß dadurch gelöst, daß der Einzugskanal als Bohrung in dem den kürzeren Abschnitt der Schnecke aufnehmenden Gehäuseabschnitt ausgebildet ist und in deren Zylinderbohrung zur Aufnahme des kürzeren Abschnittes der Schnecke mündet, wobei die Achse des Einzugskanals die Schneckenachse derart mit Abstand kreuzt und der Einzugskanal derart in Richtung auf den Plastifizierschneckenabschnitt der Schnecke verläuft, daß der freie Querschnitt zwischen der Wandung des Einzugskanals und der Außenkontur des Granulierschneckenabschnittes abnimmt, so daß eine Granulierung des eingeführten Kunststoffdrahtes im kürzeren Abschnitt der Schnecke erfolgt und daß der längere Plastifizierabschnitt axial in die den kürzeren Abschnitt der Schnecke aufnehmende Zylinderbohrung hineinragt.

Von Vorteil bei dieser Ausbildung ist, daß schon in dem Bereich, der dem Einzug des zu plastifizierenden Kunststoffmaterials dient, eine Granulierung erfolgt, so daß in dem anschließenden Plastifizierschneckenabschnitt die gesamte Länge für das Aufschmelzen des Kunststoffmateriales zur Verfügung steht. Hierdurch wird eine extrem kurze Baulänge für die Schnecke und damit für den Extruder erreicht. Dies begünstigt den Einsatz bei tragbaren Geräten, welche zur Aufbereitung eines Kunststoffstranges für die Ablage in eine Schweißfuge dienen. Der vorgesehene starre Einzugskanal bewirkt eine direkte Hinführung des Kunststoffstranges auf den Granulierschneckenabschnitt und darüberhinaus bewirkt die geneigte Anordnung, daß auf kürzestem Wege der Granuliervorgang durchgeführt wird.

Durch die Ausbildung und Führung des Einzugskanals wird erreicht, daß in keinem Betriebszustand die Gefahr des Abreißens des Stranges gegeben ist, sondern kontinuierlich ein Einzug und eine Granulierung stattfindet. Ferner wird durch die im Durchmesser vergrößerte Ausbildung des Granulierschneckenabschnittes und die Führung des Plastifizierschneckenabschnittes bis in die Zylinderbohrung für die Aufnahme des Granulierschneckenabschnittes eine sichere und kontinuierliche Überführung des granulierten Materiales in den Plastifizierschneckenabschnitt gewährleistet.

Besonders günstige Schneidverhältnisse und Granulierergebnisse werden dadurch erreicht, daß der Steigungswinkel des sägezahnförmigen Profils des kürzeren Abschnittes der Schnecke 3° bis 8° und der Neigungswinkel, mit dem die Achse des Einzugskanals die Schneckenachse kreuzt, 45° bis 55° beträgt.

Ferner wird für Extruder höherer Leistung vorgeschlagen, zwei umfangsversetzte Einzugskanäle vorzusehen.

Zur Erzielung einer klaren Trennung zwischen den Funktionen der beiden Schneckenabschnitte ist vorgesehen, zwischen dem den Plastifizierschneckenabschnitt aufnehmenden, beheizbaren Gehäuseabschnitt und dem die Zylinderbohrung für den kürzeren Granulierabschnitt der Schnecke aufweisenden Gehäuseabschnitt einen Kühlabschnitt anzuordnen.

Hierdurch wird gewährleistet, daß im Bereich des Einzugs kein Plastifizieren eintritt, welches die Zuführung des Materials behindern würde, weil beispielsweise schon eine gewisse Erweichung eintreten könnte.

Bevorzugt besteht der Kühlabschnitt aus Kühlrippen. Diese sind beispielsweise in die Gehäuseaußenkontur eingeschnitten.

Es zeigt
- Fig. 1: einen Längsschnitt durch den erfindungsgemäßen Schweißextruder mit einem zusätzlichen Heißluftaggregat.
- Fig. 2: eine Draufsicht zu Figur 1 und
- Fig. 3: einen Schnitt A-A gemäß Figur 1, wobei der Einzugskanal in die Zeichenebene hineingeklappt ist.

Der in den Zeichnungsfiguren dargestellte Extruder 1 soll zur Vorbereitung, d. h. zur Plastifizierung von strangförmigem Kunststoffmaterial, beispielsweise in Form von Kunststoffrunddraht, eingesetzt werden, wobei aus der Düse 20 des Extruders 1 ein aufgeschmolzener Strang austritt, welcher beispielsweise zur Herstellung einer Schweißverbindung zwischen entsprechenden thermoplastischen Kunststoffmaterialien dienen soll, wobei die Schweißfuge selbst durch die aus dem Heißluftaggregat 2 austretende Luft zur Erzielung der Verbindung vorbereitet ist. Es handelt sich also um einen schnellaufenden Kleinextruder.

Zunächst wird nachfolgend der Extruder 1 selbst im Einzelnen näher beschrieben. Der Extruder 1 umfaßt das Gehäuse 3 und die Schnecke 4, welche antriebsseitig gegen ein Axiallager 16 abgestützt ist. Die Schnecke 4 wird über einen Antrieb 5 drehend angetrieben, der beispielsweise von einer Bohrmaschine gebildet sein kann.

Die Schnecke 4 ist abschnittsweise aufgebaut. Sie weist einen Plastifizierschneckenabschnitt 6, in dem das Material aufgeschmolzen wird, und einen Granulierschneckenabschnitt 7 auf, in dem das zugeführte Material zerkleinert wird.

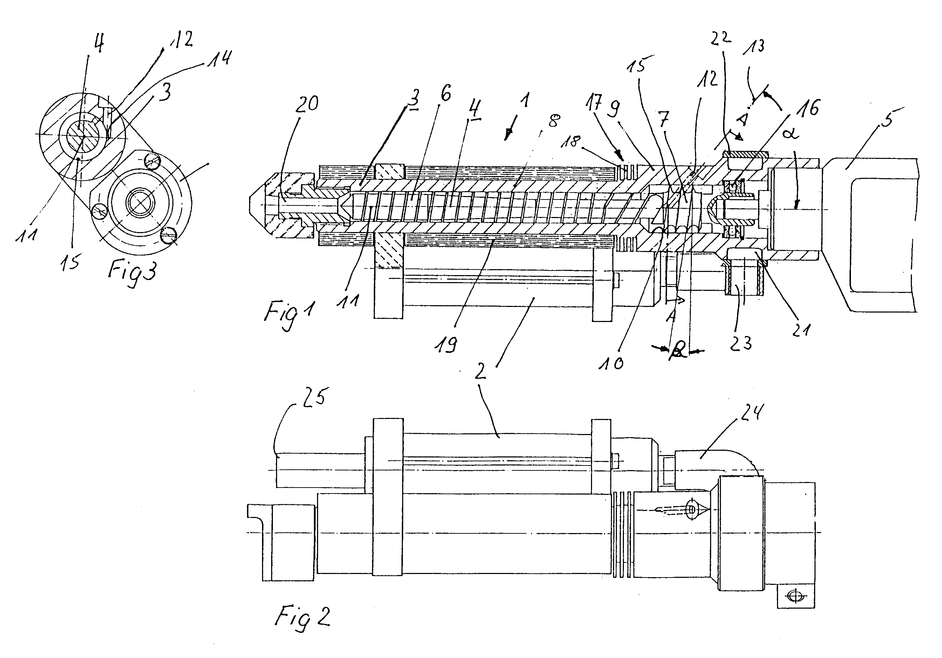

Die Schnecke 4 ist in entsprechenden Abschnitten 8, 9 des Gehäuses 3 aufgenommen. So ist beispielsweise der Granulierschneckenabschnitt 7 mit einem größeren Durchmesser ausgeführt und in einer entsprechenden Zylinderbohrung 10 des Gehäuses 3 bzw. des Gehäuseabschnitts 9 aufgenommen. Der Plastifizierschneckenabschnitt 6 besitzt einen kleineren Außendurchmesser als der Granulierschneckenabschnitt 7. Er ist ebenfalls außen zylindrisch und in einer entsprechend zylindrischen Bohrung des Gehäuseabschnittes 8 aufgenommen. Aus Figur 1 ist erkennbar, daß der Plastifizierschneckenabschnitt 6 bis in die zylindrische Bohrung 10 für den Granulierschneckenabschnitt 7 hineinragt. Das zu granulierende und plastifizierende Kunststoffmaterial wird in den Bereich des Granulierschneckenabschnittes 7 über einen Einzugskanal 12, der als Bohrung ausgebildet ist, eingeführt. Dieser ist aus den Figuren 1 und 3 erkenntlich. Er ist geneigt zur Schneckenachse 11 verlaufend angeordnet und der Neigungswinkel der Bohrungsachse 13 ist mit α bezeichnet. Wie aus Figur 3 ersichtlich ist, nähert sich die Wandung 14 des Einzugskanals 12 der Außenkontur 15 des Granulierschneckenabschnittes 7 an. Die Annäherung erfolgt in Richtung auf den Plastifizierschneckenabschnitt 6 zu. Der Neigungswinkel α ist so gewählt, daß die Bohrungsachse 13 des Einzugskanals 12 die Schneckenkontur des Granulierschneckenabschnittes 7 kreuzt. Aus diesem Grunde stehen die Größe des Neigungswinkels α für die Bohrungsachse 13 des Einzugskanals 12 und des Steigungswinkels β für das Schneckenprofil des Granulierschneckenabschnittes 7 in einer bestimmten Wechselwirkung, um die vorgenannten Verhältnisse stets zu gewährleisten. Besonders günstige Schneid- und Granulierverhältnisse ergeben sich dann, wenn das Schneckenprofil des Granulierschneckenabschnittes 7 Sägezahnförmig ausgebildet ist, wobei die steiler verlaufende Flanke dem Plastifizierschneckenabschnitt 6 zugerichtet ist.

Um ein frühzeitiges Abreißen des eingeführten Kunststoffstranges zu vermeiden, ist ein Übergang zwischen dem Einzugskanal 12 und der Zylinderbohrung 10 im Gehäuseabschnitt 9 vorgesehen, welcher gewährleistet, daß der freie Querschnitt zwischen der Außenkontur 15 des Granulierschneckenabschnittes 7 und dem Einzugskanal 12 abnimmt. Aus diesem Grunde, nähert sich die Wandung 14 des Einzugskanals 12 mit fortschreitender Annäherung auf den Plastifizierschneckenabschnitt 6 der Außenkontur 15 des Granulierschneckenabschnittes 7 an. Zumindest ein Teil des den Plastifizierschneckenabschnitt 6 aufnehmenden Gehäuseabschnittes 8 ist beheizbar ausgebildet. Hierzu ist der Gehäuseabschnitt 8 von einer Heizung 19 umgeben. Die Heizung 19 dient insbesondere dazu, kontinuierliche Aufschmelzverhältnisse zu gewährleisten. So kann die Messung der aktuellen Temperaturen sowohl zur Heizungssteuerung als auch zur Steuerung des Antriebes 5 dienen. Beispielsweise kann der Antrieb 5 so mit der Heizungssteuerung gekoppelt sein, daß dann, wenn die gewünschte Plastifizierungstemperatur noch nicht erreicht ist, der Antrieb 5 nicht betätigt werden kann und damit die Schnecke 4 auch nicht in Rotation versetzt werden kann.

Um zu verhindern, daß ein Temperaturaustausch zwischen den beiden Gehäuseabschnitten 8 und 9 erfolgt, ist ein Kühlabschnitt 17 zwischen diesen beiden Gehäuseabschnitten 8 und 9 vorgesehen. Der Kühlabschnitt 17 wird im wesentlichen durch Kühlrippen 18 gebildet, die in die Außenkontur des Gehäuses 3 eingeschnitten sind. Hierdurch wird auch verhindert, daß aufgrund eines Temperaturaustausches eine Erwärmung des Gehäuseabschnittes 9 soweit erfolgen kann, daß eine Vorerwärmung des eingeführten Kunststoffstranges eintritt, was eine saubere Granulierung des Kunststoffstranges im Bereich des Granulierschneckenabschnittes 7 behindern würde.

Das Heißluftaggregat 2 ist als Heizpatrone ausgebildet, durch welche ein Luftstrom, der durch ein externes Gebläse erzeugt wird, über Schlauch- und Rohrleitungen hindurchgeleitet wird. Dieser extern erzeugte Gebläseluftstrom kann außerdem noch zur Kühlung des den Granulierschneckenabschnitt 7 aufnehmenden Gehäuseabschnittes 9 genutzt werden. So ist beispielsweise aus den Figuren 1 und 2 ersichtlich, daß im Gehäuseabschnitt 9 und zwar im Bereich des Axiallagers 16 ein Ringkanal 21 vorgesehen ist, der als Vertiefung in den Gehäuseabschnitt 9 eingeschnitten und durch einen Abdeckring 22 verschlossen ist. Der Abdeckring 22 besitzt einen Stutzen mit einer Zuluftöffnung 23, an welchen beispielsweise ein Schlauch, der mit dem externen Gebläse verbunden ist, anschließbar ist. Die Luft wird über den Schlauch in die Zuluftöffnung 23, den Ringkanal 21 und die daran angeschlossene Zuluftleitung 24 dem Heißluftaggregat 2 zugeführt.

Das Heißluftaggregat 2 ist mit einer Ausströmdüse 25 versehen, die etwa bis in den Bereich der Düse 20 des Extruders 1 reicht und die dazu dient, die Heißluft auf die vorbereitete Schweißfuge zu leiten, um daß Material im Bereich der Schweißfuge anzuschmelzen, in welche dann der aus der Düse 20 austretende Materialstrang ablegbar ist.

## Patentansprüche

1. Schweißextruder zum Plastifizieren eines Kunststoffdrahtes, insbesondere eines Runddrahtes, aus thermoplastischem Kunststoff, mit einem Gehäuse (3) und einer im Gehäuse drehbar angeordnete Schnecke (4), wobei die Schnecke (4) einen kürzeren Abschnitt (7) mit einem im Querschnitt sägezahnförmigen Profil zum Einziehen des Kunststoffdrahtes aufweist, und einen dazu im Durchmesser verringerten, längeren und über zumindest einen Teil seiner Länge beheizbaren Plastifizierabschnitt (6) zum Plastifizieren des Kunststoffdrahtes aufweist, mit einem Einzugskanal (12) im Gehäuse (3), der zur Außenkontur des Profils des kürzeren Abschnitts (7) der Schnecke (4) offen ist und über welchen der Kunststoffdraht in Kontakt mit diesem Abschnitt (7) ist, und mit einem Antrieb (5) für die Schnecke (4),
dadurch gekennzeichnet,
daß der Einzugskanal (12) als Bohrung in dem den kürzeren Abschnitt (7) der Schnecke (4) aufnehmenden Gehäuseabschnitt (9) ausgebildet ist und in deren Zylinderbohrung (10) zur Aufnahme des kürzeren Abschnittes (7) der Schnecke (4) mündet, wobei die Achse (13) des Einzugskanals (12) die Schneckenachse (10) derart mit Abstand kreuzt und der Einzugskanal (12) derart in Richtung auf den Plastifizierschneckenabschnitt (6) der Schnecke (4) verläuft, daß der freie Querschnitt zwischen der Wandung des Einzugskanals (12) und der Außenkontur (11) des Granulierschneckenabschnittes (7) abnimmt, so daß eine Granulierung des eingeführten Kunststoffdrahtes im kürzeren Abschnitt (7) der Schnecke (4) erfolgt und daß der längere Plastifizierabschnitt (6) axial in die den kürzeren Abschnitt (7) der Schnecke (4) aufnehmende Zylinderbohrung (10) hineinragt.

2. Schweißextruder nach Anspruch 1,
dadurch gekennzeichnet,
daß der Steigungswinkel (B) des sägezahnförmigen Profils des kürzeren Abschnittes (7) der Schnecke (4) 3° bis 8° und der Neigungswinkel (A), mit dem die Achse (13) des Einzugskanals (12) die Schneckenachse (11) kreuzt, 45° bis 55° beträgt.

3. Schweißextruder nach Anspruch 1,
dadurch gekennzeichnet,
daß zwei umfangsversetzte Einzugskanäle (12) vorgesehen sind.

4. Schweißextruder nach Anspruch 1,
dadurch gekennzeichnet,
daß zwischen den dem Plastifizierabschnitt (6) aufnehmenden, beheizbaren Gehäuseabschnitt (8) und dem die Zylinderbohrung (10) für den kürzeren Abschnitt (7) der Schnecke (4) aufweisenden Gehäuseabschnitt (9) ein Kühlabschnitt (17) angeordnet ist.

5. Schweißextruder nach Anspruch 4,
dadurch gekennzeichnet,
daß der Kühlabschnitt (17) aus Kühlrippen (18) besteht.

## Claims

1. A welding extruder for plasticizing a plastic wire feedstock, especially a round wire feedstock, consisting of thermoplastic plastics; having a housing (3) and screw (4) rotatably arranged in the housing, the screw (4) comprising a shorter portion (7) having a profile with a saw-tooth-shaped cross-section for drawing in the plastic wire feedstock, and a longer plasticizing portion (6) whose diameter is reduced relative to said shorter portion (7), which is heatable along at least part of its length and used for plasticising the plastic wire feedstock; having an feed channel (12) in the housing (3) which is open towards the outer contour of the profile of the shorter portion (7) of the screw (4) and by means of which the plastic wire feedstock is in contact with said portion (7); and having a drive (5) for the screw (4),
characterised in
that the feed channel (12) is provided in the form of a bore in the housing portion (9) accommodating the shorter portion (7) of the screw (4) and terminates in its cylindrical bore (10) for accommodating the shorter portion (7) of the screw (4), the axis (13) of the feed channel (12) intersecting the screw axis (10), and the feed channel (12) extending in the direction of the plasticizing screw portion (6) of the screw (4), in such a manner that the free cross-section between the wall of the feed channel (12) and the outer contour (11) of the granulating screw portion (7) decreases so that the plastic wire feedstock as introduced is granulated in the shorter portion (7) of the screw (4); and that the longer plasticizing portion (6) axially extends into the cylindrical bore (10) accommodating the shorter portion (7) of the screw (4).

2. A welding extruder according to claim 1,
characterised in
that the pitch angle (B) of the saw-tooth-shaped profile of the shorter portion (7) of the screw (4) amounts to 3° to 8° and that the angle of inclination (A) at which the axis (13) of the feed channel (12) intersects the screw axis (11) amounts to 45° to 55°.

3. A welding extruder according to claim 1,
characterised in
that there are provided two circumferentially offset feed channels (12).

4. A welding extruder according to claim 1,
characterised in
that a cooling portion (17) is arranged between the heatable housing portion (8) accommodating the plasticizing portion (6) and the housing portion (9) comprising the cylindrical bore (10) for the shorter portion (7) of the screw (4).

5. A welding extruder according to claim 4,
characterised in
that the cooling portion (17) consists of cooling ribs (18).

## Revendications

1. Extrudeuse de soudage pour la plastification d'un fil de matière plastique, notamment d'un fil rond d'une matière thermoplastique, comprenant un corps (3) et une vis (4) montée rotative dans le corps, la vis (4) possédant un segment court (7) qui présente en coupe un profil en dents de scie destiné à tirer le fil de matière plastique, et un segment de plastification (6), de diamètre réduit par rapport au premier, pouvant être chauffé sur au moins une partie de sa longueur, et destiné à plastifier le fil de matière plastique, et comprenant aussi un canal de tirage ménagé (12) dans le corps (3), qui débouche sur le contour extérieur du profil du segment court (7) de la vis (4) et par l'intermédiaire duquel le fil de matière plastique est en contact avec ce segment (7), ainsi qu'un dispositif d'entraînement (5) pour la vis (4),
caractérisée
en ce que le canal de tirage (12) forme un perçage pratiqué dans le segment (9) du corps qui loge le segment court (7) de la vis (4), et débouche et dans l'alésage de cylindre (10) qui loge le segment court (7) de la vis (4), le canal de tirage (12) ayant son axe (13) qui croise l'axe (10) de la vis à un écartement tel, et le canal de tirage (12) s'étendant en direction du segment de plastification (6) de la vis (4) d'une manière telle que la section transversale libre subsistant entre la paroi du canal de tirage (12) et le contour extérieur (11) du segment de granulation (7) de la vis décroisse de manière qu'il se produise une granulation du fil de matière plastique introduit dans le segment court (7) de la vis (4), et en ce que le segment de plastification (6) de plus grande longueur est engagé axialement dans l'alésage de cylindre (10) qui loge le segment court (7) de la vis (4).

2. Extrudeuse de soudage selon la revendication 1,
caractérisée,
en ce que l'angle de pente (B) du profil en dents de scie du segment court (7) de la vis (4) est de 3 à 8° et l'angle d'inclinaison (A) selon lequel l'axe (13) du canal de tirage (12) croise l'axe (11) de la vis est de 45 à 55°.

3. Extrudeuse de soudage selon la revendication 1,
caractérisée
en ce qu'il est prévu deux canaux de tirage (12) décalés selon la circonférence.

4. Extrudeuse de soudage selon la revendication 1,
caractérisée
en ce qu'un segment de refroidissement (17) est disposé entre le segment chauffé (8) du corps, qui loge le segment de plastification (6), et le segment (9) du corps qui présente l'alésage de cylindre (10) qui loge le segment court (7) de la vis (4).

5. Extrudeuse de soudage selon la revendication 4,
caractérisée
en ce que le segment de refroidissement (17) est composé d'ailettes de refroidissement (18).
